# EUROPEAN PATENT APPLICATION

(11) **EP 4 799 772 A1**
(43) Date of publication of application: **02.09.2026**
(21) Application number: 26159589.6
(22) Date of filing: 19.02.2026
(51) Int. Cl.: B25J 9/16, H04N 7/15

(54) **EXECUTING A SIMULATED VERSION OF A ROBOTIC DEVICE TASK VIA A SIMULATION ENVIRONMENT IN A COLLABORATION SESSION**

(30) Priority: 27.02.2025 US 202519065315
(71) Applicant: Microsoft Technology Licensing, LLC, Redmond, WA 98052 (US)
(72) Inventor: ROSENSTEIN, Daniel, Redmond, Washington, 98052 (US); STEVENS, Mark Alan, Redmond, Washington, 98052 (US); KNIGHT, Brian Thomas, Redmond, Washington, 98052 (US); CHUNG, Timothy Hahndeut, Redmond, Washington, 98052 (US); GUAGLIANO, Christopher Scott, Redmond, Washington, 98052 (US)
(74) Representative: CMS Cameron McKenna Nabarro Olswang LLP

(57) **Abstract**

A system implements techniques for executing a collaboration session between at least one human participant, at least one robotic device participant, and at least one artificial intelligence agent participant. The collaboration session can be executed in relation to a mission to be completed within a geographical environment. The system described herein generates a simulation environment in the context of the collaboration session. The simulation environment enables the simulated execution of a simulated version of an actual robotic device for validation purposes. For instance, a dangerous task to be executed by the actual robotic device may be simulated before actual execution to ensure the safety of the task is validated. Or, a complex task to be executed by the actual robotic device may be simulated before actual execution to ensure the effectiveness and/or efficiency of the task is validated.

## Description

### BACKGROUND

The use of robotic devices is becoming more prevalent in the world. For instance, different types of robotic devices have recently been configured to perform various tasks for humans. In some cases, the performance of tasks by robotic devices replaces the need for humans to perform the tasks (e.g., dangerous tasks, time-consuming tasks). Thus, in many areas of life, robotic devices have been proven to improve the way in which people live.

The tasks that can be performed by robotic devices are becoming more complex. Furthermore, the tasks that can be performed by robotic devices are becoming interrelated. Unfortunately, existing systems fail to provide a way for effective and efficient coordination of robotic devices that are expected to perform complex and interrelated tasks. It is with respect to these and other considerations that the disclosure made herein is presented.

### SUMMARY

The system described herein implements techniques for executing a collaboration session between at least one human participant, at least one robotic device participant, and at least one artificial intelligence agent participant. More specifically, the system described herein generates a simulation environment in the context of the collaboration session. The simulation environment enables the simulated execution of a simulated version of an actual robotic device for validation purposes. For instance, a dangerous task to be executed by the actual robotic device may be simulated before actual execution to ensure the safety of the task is validated. Or, a complex task to be executed by the actual robotic device may be simulated before actual execution to ensure the effectiveness and/or efficiency of the task is validated.

As described herein, a robotic device is a programmable device configured to implement a series of physical actions automatically. In this context, "automatically" means the physical actions are implemented via the embedded programming of the robotic device and/or via remote control of the robotic device (e.g., in a scenario where a human and robotic device are not co-located).

In various examples described herein, the collaboration session is executed in relation to a mission to be completed within a geographical environment. A mission defines one or more goals. Accordingly, a mission typically includes a set of tasks to be completed to achieve the goals. In various examples, the mission is related to a response to an event and the set of tasks to be completed in accordance with the mission is distributed across available resources. More specifically, different human and/or robotic device roles may have varied responsibilities in implementing different tasks to complete the mission.

As an illustrative example, an event may be a natural disaster such as a fire from a lightning strike, a hurricane, or an earthquake. The use of robotic devices can be helpful in responding to a natural disaster event. Typically, multiple organizations respond to execute and/or complete a mission with the goal of helping people that are affected by the natural disaster event. For instance, first tasks for the mission may be related to finding and rescuing survivors (e.g., removing people from dangerous areas). Second tasks for the mission may be related to limiting further damage caused by the natural disaster event (e.g., finding areas where the fire is burning and extinguishing the fire, securing unstable buildings). Third tasks for the mission may be related to identifying damaged/offline "utility" infrastructure (e.g., electric grid infrastructure, water supply infrastructure, gas pipeline infrastructure) and fixing the damage/offline utility infrastructure so it comes back online in due time.

In the illustrative example of the preceding paragraph, the multiple organizations often include different government agencies from local, state, and/or federal jurisdictions. Moreover, the multiple organizations may include private and/or charitable organizations as well. Each of the organizations may include their own personnel, their own experiences and/or procedures with respect to deploying robotic devices, as well as their own execution and/or communications infrastructure to operate the robotic devices. When different personnel and different types of robotic devices from different organizations converge on a geographical environment in response to an event such as a natural disaster, it is difficult to coordinate the tasks so that the mission can be achieved in a more effective and efficient manner.

The collaboration session described herein creates an effective and efficient solution for humans and robotic devices to coordinate the performance of the mission. Additionally, the collaboration session described herein allows for artificial intelligence agents to assist in the coordination of the performance of the mission. For instance, via the execution of a collaboration session, humans from different organizations that use heterogenous robotic devices (e.g., different types of robotic devices, different types of communications) can quickly connect through a central system to collaborate and coordinate performance of tasks that are intended to complete a mission. Moreover, access to an intelligence layer provided by artificial intelligence agents that are able to participate in the collaboration session enhances the collaboration and coordination.

The illustrative example of a natural disaster event provided above is a larger-scale event. However, it is understood in the context of this disclosure that a mission can be implemented at different scales. For instance, a mission can also be implemented in response to a smaller-scale event that only requires coordination and collaboration between a limited number of humans (e.g., one, two, or three humans), a limited number of robotic devices (e.g., one, two, or three robotic devices), and a limited number of artificial intelligence agents (e.g., one, two, or three artificial intelligence agents). For example, a collaboration session may be created for a human to coordinate with a robotic device and/or an artificial intelligence agent to find a particular team member (e.g., determine a current location of the particular team member) in an office building so the team member can resolve a project issue a team has encountered. In this example, the event is the project issue and the mission is finding the particular team member.

As shown via the examples described above, the coordination enabled via the collaboration session described herein may be scaled to apply in any context in which work (e.g., a mission) needs to be done by a human, a robotic device, and an artificial intelligence agent. Various example contexts include disaster response, safety and security, healthcare and medical instrumentation, manufacturing and industrial lines/warehouses, office and/or personal management, agriculture, construction, and so forth. Accordingly, a geographical environment, as described herein, can include an identifiable "real-world" setting and/or area. The identifiable real-world setting and/or area can be indoor, such as an office building, a retail building, a personal residence, a warehouse, a hospital, a medical office, a factory floor, a manufacturing line, or other types of settings and/or areas within physical structures that can be blueprint- or human-defined. Alternatively, the identifiable real-world setting and/or area can be outdoor, such as a forest, a mountain, a construction site, a neighborhood, a town, a city, a county, a state, a country, a field, a pasture, or other type of outdoor settings and/or areas that can be map- or human-defined.

Robotic devices can operate on land, on water, in the air, in space, or a combination thereof, and can be programmed to perform different tasks. For example, an unmanned aerial vehicle (UAV) may be tasked with capturing video and/or dropping items from the sky. A sea drone may be tasked with capturing video and/or providing supplies to an area that cannot be reached by land. A bomb disposal robotic device may be tasked with capturing video and/or safely disabling an explosive device. A backhoe robotic device may be tasked with capturing video and/or moving dirt, rocks, and/or rubble. A dump truck robotic device may be tasked with capturing video and hauling away dirt, rocks, and/or rubble. An office or retail robotic device may be tasked with stocking retail and/or supply shelves. A warehouse robotic device may be tasked with sorting items in bins. A manufacturing robotic device may be tasked with connecting two parts of an apparatus. A search and rescue robotic device may be tasked with finding and moving a person or an object away from a dangerous situation. These example robotic devices are just a few of the numerous different types of robotic devices that have been manufactured and configured to perform various tasks in varying contexts.

Regardless of the size and/or scope of the mission and/or a scale of an event to which the mission responds, the collaboration session described herein enables at least one human and one robotic device to work together in conjunction with an artificial intelligence agent. The artificial intelligence agent functions as a translation and/or orchestration interface between the human and the robotic device. The collaboration session presents a low barrier of entry for humans and/or robotic devices to be part of a coordinated mission. Moreover, the collaboration session enables the integration of heterogenous robotic devices (e.g., different fleets of robotic devices) that are not designed and/or configured to communicate with one another. Moreover, through the use of the aforementioned accessible artificial intelligence agent, the collaboration session enables effective participation for humans without detailed working knowledge of the robotic devices deployed to the geographical environment in which the mission is being implemented, thereby reducing the cognitive load required for successful missions and increasing the overall efficiency for mission completion.

The humans, robotic devices, and/or artificial intelligence agents participating in a collaboration session are respectively referred to herein as human participants, robotic device participants, and artificial intelligence agent participants. The disclosed system is configured to expose an application programming interface that allows robotic devices to access and download a "robot agent" that enables robotic device participation in the collaboration session. The robot agent includes centralized code that configures the robotic devices with communication and/or configuration software that is compatible with the collaboration session. That is, after downloading the robot agent, a robotic device can participate in the collaboration session via the communication (e.g., transmission) of robot data.

In one example, the robot data includes sensor data sensed by a sensor embedded in a robotic device participant. More specifically, the sensor data can include one or more of image data (e.g., still images) captured by an image capture device embedded in or attached to the robotic device participant, video data (e.g., a sequence of video frames) captured by a video capture device embedded in or attached to the robotic device participant, audio data captured by a microphone embedded in or attached to the robotic device participant, temperature data captured by a thermometer embedded in or attached to the robotic device participant, air quality data captured by an air quality sensor embedded in or attached to the robotic device participant, pressure data captured by a pressure sensor embedded in or attached to the robotic device participant, velocity data captured by a velocity sensor embedded in or attached to the robotic device participant, smoke data captured by a smoke detecting sensor embedded in or attached to the robotic device participant, gas data captured by a gas detecting sensor embedded in or attached to the robotic device participant, thermal data captured by a thermal sensor embedded in or attached to the robotic device participant, depth data captured by a depth sensor embedded in or attached to the robotic device participant, odor (smell) data captured by an odor sensor embedded in or attached to the robotic device participant, lidar data captured by a laser component embedded in or attached to the robotic device participant, radar data captured by a radar component embedded in or attached to the robotic device participant, or infrared (IR) data captured by an IR sensor embedded in or attached to the robotic device participant. While a list of example types of data and/or sensors is provided above, it is understood in the context of this disclosure, that a robotic device participant can be configured with hardware, firmware, and/or software to detect and/or sense any type of environmental data. In another example, the robot data includes location data for the robotic device (e.g., a Global Positioning System (GPS) location).

The robot agent made available by the system via the application programming interface configures a bi-directional communication bridge between a robotic device and the collaboration session. More specifically, this bi-directional communication bridge connects the robotic device to cloud infrastructure that hosts the collaboration session via different types of networks including private and/or public local area networks (LANs), private and/or public metropolitan area networks (MANs), private and/or public wide area networks (WANs), Wi-Fi networks, public and/or private mobile networks (e.g., 5G networks, LTE networks), satellite networks, radio networks, and so forth.

The collaboration session is started when any of the participants (e.g., a human participant, a robotic device participant, or an artificial intelligence agent participant) creates the collaboration session and joins the collaboration session. The participant that starts the collaboration session can then add other participants to the collaboration session via an invitation to join. In various examples, the invitation to join is a notification that wakes a robotic device participant from a sleep state and/or activates the robotic device agent to enable the bi-directional communication bridge to/from the collaboration session. As described above, after a robotic device participant has joined the collaboration session, the robotic device can start communicating (e.g., reporting) sensor data and/or location data to the collaboration session.

After the collaboration session is started, the system generates an interaction environment for the collaboration session. As described in further detail below, the interaction environment includes a graphical representation for each of a plurality of participants that have joined the collaboration session. The system provides the interaction environment to a computing device associated with the human participant, as further discussed below in the examples of the Detailed Description. Moreover, the system provides a context of the whole interaction environment, or a particular aspect of the interaction environment (e.g., a video stream), to an artificial intelligence agent for processing and analysis.

To this end, the system described herein identifies a task, related to the mission, to be executed by a robotic device participant that is currently located in the geographical environment, or a particular part of the geographical environment. The system then generates a simulation environment that corresponds to the geographical environment or the particular part of the geographical environment. Before transmitting instructions for the robotic device participant to actually execute the task in the geographical environment or the particular part of the geographical environment, the system causes the simulation environment to be displayed in the interaction environment of the collaboration session. Moreover, the system causes a simulated version of the robotic device participant to execute the task in the simulation environment. In various examples, the system uses an identifier associated with the robotic device participant to retrieve the simulated version of the robotic device participant (e.g., a digital twin, or digital model, that is based on a type of the robotic device participant).

In various examples, the system generates the simulation environment by accessing publicly available data and/or sensor data from the robotic device participant or another robotic device participant physically located in the geographical environment or the particular part of the geographical environment. The publicly available data may include static data such as a map of the geographical environment, blueprints for physical structures, etc. Alternatively, the publicly available data may include dynamic data from sources external to the collaboration session (e.g., a weather report, a hurricane warning). Thus, in one embodiment, the dynamic data is related to environmental metrics that may change over time. Different types of sensor data, as described above, can also be used to generate the simulation environment and the sensor data can be static data (e.g., a video stream can be used to outline a structure of a building) or dynamic data. Additionally, location data revealing real-world coordinates, as received from the robotic device participant, can be mapped to simulation coordinates in order to generate the simulation environment.

The system uses the publicly available data and/or the sensor data to determine a current state of the geographical environment or the part of the geographical environment that is reflected, or simulated, in the simulation environment. This essentially creates a digital twin, or digital model, for the geographical environment or the part of the geographical environment that is usable for simulation and validation purposes. In various examples, the system includes a plurality of different simulation environments for the geographical environment or the part of the geographical environment. The system can then select the simulation environment from the plurality of different simulation environments based on a type of the task to be executed by the robotic device participant and the current state of the geographical environment or the part of the geographical environment.

In further examples, the system can cause multiple simulation environments to be displayed for task execution. A participant may desire to perform multiple simulations in order to evaluate, and identify, the best way to execute the task in the real world. Alternatively, a participant may iterate through multiple simulations based on a determination that execution of the task by the simulated version of the robotic device participant in previous simulations cannot be validated for safety, effectiveness, or efficiency. Consequently, after selecting and displaying a first simulation environment, the system can select a subsequent simulation environment from the plurality of different simulation environments. Again, this selection can be based on the type of the task to be executed by the robotic device participant and the current state of the part of the geographical environment that is reflected in the subsequent simulation environment. The system can then cause the subsequent simulation environment to be displayed in the interaction environment so that the simulated version of the robotic device participant can execute the task in the subsequent simulation environment.

In various examples, the system maps the task to be executed by the robotic device participant to a predefined list of tasks, based on type, that are associated with a level of danger or complexity that requires validation for safety, effectiveness, and/or efficiency. This mapping is used to ensure that a simulation of task execution by a simulated version of the robotic device participant is implemented before actual task execution by the actual the robotic device participant. Consequently, the system can confirm, in a context of the collaboration session, that the validation for safety, effectiveness, and/or efficiency of the task is complete. In response to the confirmation, the system can expose mechanisms for the actual robotic device participant to execute the task in the geographical environment or the part of the geographical environment.

The task execution in the simulation environment can be controlled by a human participant. For example, the system is configured to execute, in association with the simulation environment and collaboration session, a mechanism for a human participant to provide input that activates a control element for operating the simulated version of the robotic device participant. The system receives, via the mechanism, the input from the human participant. The input causes the control element for operating the simulated version of the robotic device participant to be activated in association with the simulation environment. In one specific example, activating the control element comprises displaying the control element in the context of the interaction environment. In another specific example, activating the control element configures the simulation environment to engage with operation hardware associated with a computing device being used by the human participant. The system ultimately receives, via the control element, a control input from the human participant and displays, in the simulation environment of the collaboration session and based on the control input received, an action of the simulated version of the robotic device participant.

Additionally or alternatively, the task execution in the simulation environment can be controlled by an artificial intelligence agent participant and/or another robotic device participant. For example, the system is configured to execute, within the simulation environment, a mechanism for a human participant to provide input that describes a task that is part of the mission and that causes an artificial intelligence agent participant to assist with completion of the task that is part of the mission in a simulated manner. The system receives, via the mechanism, the input from the human participant. The artificial intelligence agent participant is configured to assist with completion of the task in the simulation environment by generating an instruction for the simulated version of the robotic device participant. The system then provides, via the collaboration session and based on the input received, the instruction from the artificial intelligence agent participant to the simulated version of the robotic device participant in the simulation environment.

In one example described herein, aspects (e.g., digital models, or digital twins, of real-world objects determined to be in the geographical environment) of the simulation environment can be provided as overlay elements within a live video stream that is being captured by the robotic device participant and transmitted from the robotic device participant to the collaboration session.

In various examples, the system can determine that multiple robotic device participants are associated with execution of the task in the geographical environment. That is, a second robotic device participant may be in a position to assist a first robotic device participant with the execution of the task in the context of the collaboration session. Accordingly, the system can cause a second simulation environment to be displayed in the interaction environment so that a simulated version of the second robotic device participant can assist with execution of the task in the second simulation environment. The simulation environments for different robotic device participants can be displayed in separate display areas of the interaction environment. Alternatively, the system can cause the simulated version of the second robotic device participant to assist with execution of the task in the same simulation environment that is displayed for a first robotic device participant.

This Summary is provided to introduce a selection of concepts in a simplified form that are further described blow in the Detailed Description. This Summary is not intended to identify key or essential features of the claimed subject matter, nor is it intended to be used as an aid in determining the scope of the claimed subject matter. The term "techniques," for instance, may refer to system(s), method(s), computer-readable instructions, module(s), algorithms, hardware logic, and/or operation(s) as permitted by the context described above and throughout the document.

### BRIEF DESCRIPTION OF DRAWINGS

The Detailed Description is described with reference to the accompanying figures. In the description detailed herein, references are made to the accompanying drawings that form a part hereof, and that show, by way of illustration, specific embodiments or examples. The drawings herein are not drawn to scale. Like numerals represent like elements throughout the several figures.
FIG. 1 illustrates an example environment in which a system executes a collaboration session between at least one human participant, at least one robotic device participant, and at least one artificial intelligence agent participant, and further, in which the system generates a simulation environment for simulated execution of the robotic device participant in the context of the collaboration session.
FIG. 2 illustrates further aspects of the system executing a collaboration session that generates the simulation environment for simulated execution of the robotic device participant in the context of the collaboration session.
FIG. 3 illustrates example aspects the system uses to generate one or more simulation environments for simulated execution of one or more robotic device participants in the context of the collaboration session.
FIG. 4A illustrates an example interaction environment in which a task that is required to be validated via simulation can be identified via a message in a chat.
FIG. 4B illustrates the example interaction environment of FIG. 4A, where simulation can be specifically requested for a given task.
FIG. 4C illustrates the example interaction environment of FIG. 4A, where a simulation environment is displayed in a context of a collaboration session.
FIG. 4D illustrates the example interaction environment of FIG. 4C, where a simulation environment displays a control element for a human participant.
FIG. 4E illustrates the example interaction environment of FIG. 4C, where a simulation environment displays a notification that control of a simulated version of a robotic device participant belongs to an artificial intelligence agent participant.
FIG. 5A illustrates an alternative layout of the example interaction environment of FIG. 4C.
FIG. 5B illustrates the example interaction environment of FIG. 5A, where overlay elements associated with a simulation environment are displayed on top of a video stream.
FIG. 6A illustrates an example interaction environment in which multiple simulation environments are separately displayed for simulated versions of multiple robotic device participants.
FIG. 6B illustrates an example interaction environment in which a single simulation environment is displayed for simulated versions of multiple robotic device participants.
FIG. 7 illustrates a process for executing a collaboration session between at least one human participant, at least one robotic device participant, and at least one artificial intelligence agent participant, where the system generates a simulation environment for simulated execution of the robotic device participant in the context of the collaboration session.
FIG. 8 is a computer architecture diagram illustrating an illustrative computer hardware and software architecture for a computing system capable of implementing aspects of the techniques and technologies presented herein.

### DETAILED DESCRIPTION

The system described herein implements techniques for executing a collaboration session between at least one human participant, at least one robotic device participant, and at least one artificial intelligence agent participant. In various examples described herein, the collaboration session is executed in relation to a mission to be completed within a geographical environment. A mission defines one or more goals. Accordingly, a mission typically includes a set of tasks to be completed to achieve the goals. In various examples, the mission is related to a response to an event and the set of tasks to be completed in accordance with the mission is distributed across available resources. More specifically, different human and/or robotic device roles may have varied responsibilities in implementing different tasks to complete the mission.

The system described herein generates a simulation environment in the context of the collaboration session. The simulation environment enables the simulated execution of a simulated version of an actual robotic device for validation purposes. For instance, a dangerous task to be executed by the actual robotic device may be simulated before actual execution to ensure the safety of the task is validated. Or, a complex task to be executed by the actual robotic device may be simulated before actual execution to ensure the effectiveness and/or efficiency of the task is validated.

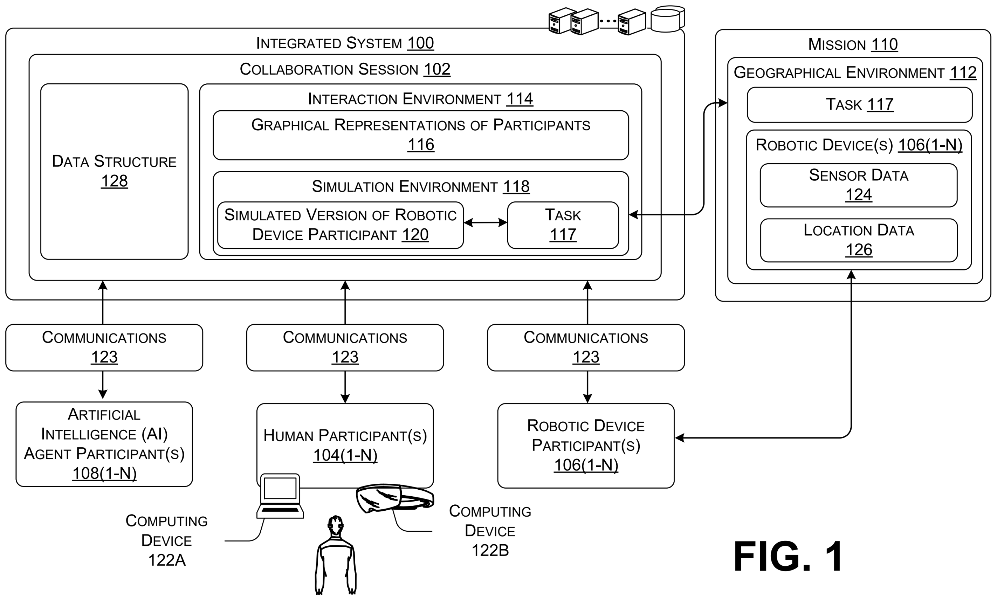

FIG. 1 illustrates an example environment in which a system 100 creates and/or executes a collaboration session 102 between one or more human participant(s) 104(1-N), one or more robotic device participant(s) 106(1-N), and one or more artificial intelligence (AI) agent participant(s) 108(1-N). The number N represents a positive integer number and can be the same or different for the human participants 104(1-N), the robotic device participants 106(1-N), and the AI agent participants 108(1-N). For example, the numbers for the different types of participants can be smaller (e.g., one, two, three, four) if the collaboration session 102 is small in scale. Alternatively, the numbers for the different types of participants can be larger (e.g., five, ten, fifteen, fifty) if the collaboration session 102 is large in scale.

The system 100 is "integrated" in the sense that it seamlessly provides common collaboration session features so that the human participant(s) 104(1-N), the robotic device participant(s) 106(1-N), and the AI agent participant(s) 108(1-N) can all work together toward a mission 110 to be completed within a geographical environment 112. That is, the collaboration session 102 may be executed in relation to the mission 110 and the geographical environment 112. The mission 110 may be related to a response to an event and a set of tasks to be completed in accordance with the mission 110 is distributed across different human and/or robotic device roles with varied responsibilities. Consequently, the robotic device participants 106(1-N) reflect robotic devices that are operating and physically located in the geographical environment 112. A robotic device participant 106 is a programmable device configured to implement a series of physical actions automatically. In this context, "automatically" means the physical actions are implemented via the embedded programming of the robotic device participant 106 and/or via remote control of the robotic device participant 106 (e.g., when a human and robotic device are not co-located).

As an illustrative example, an event may be a natural disaster such as a fire from a lightning strike, a hurricane, or an earthquake. The use of robotic devices 106(1-N) can be helpful in responding to a natural disaster event. Typically, multiple organizations respond to execute and/or complete a mission 110 with the goal of helping people that are affected by the natural disaster event. For instance, first tasks for the mission 110 may be related to finding and rescuing survivors (e.g., removing people from dangerous areas). Second tasks for the mission 110 may be related to limiting further damage caused by the natural disaster event (e.g., finding areas that are burning and extinguishing the fire, securing unstable buildings). Third tasks for the mission 110 may be related to identifying damaged/offline "utility" infrastructure (e.g., electric grid infrastructure, water supply infrastructure, gas pipeline infrastructure) and fixing the damage/offline utility infrastructure so it comes back online in due time.

In this illustrative example, the multiple organizations often include different government agencies from local, state, and/or federal jurisdictions. Moreover, the multiple organizations may include private and/or charitable organizations as well. Each of the organizations may include their own personnel (e.g., the human participants 104(1-N)), their own experiences and/or procedures with respect to deploying robotic devices 106(1-N) to the geographical environment 112 in which the event occurs, as well as their own execution and/or communications infrastructure to operate the robotic devices 106(1-N). When different personnel and different types of robotic devices 106(1-N) from different organizations converge on the geographical environment 112 in response to an event such as a natural disaster, it is difficult to coordinate the tasks so that the mission can be achieved in a more effective and efficient manner.

The collaboration session 102 creates an effective and efficient solution for human participants 104(1-N) and robotic device participants 106(1-N) to coordinate the performance of the mission 110 in the geographical environment 112. Additionally, the collaboration session 102 allows for the AI agent participants 108(1-N) to assist in the coordination of the performance of the mission 110 in the geographical environment 112. For instance, via the execution of the collaboration session 102, humans from different organizations that use heterogenous robotic devices (e.g., different types of robotic devices, different types of communications) can quickly connect through a central, integrated system 100 to collaborate and coordinate performance of tasks that are intended to complete the mission 110.

The illustrative example of a natural disaster event provided above is a larger-scale event. However, it is understood in the context of this disclosure that a mission 110 can be implemented at different scales. For instance, a mission 110 can also be implemented in response to a smaller-scale event that only requires coordination and collaboration between a limited number of humans (e.g., one, two, or three humans), a limited number of robotic devices (e.g., one, two, or three robotic devices), and a limited number of artificial intelligence agents (e.g., one, two, or three artificial intelligence agents). For example, a human participant 104 may create a collaboration session 102 to coordinate with a robotic device participant 106 and/or an AI agent participant 108 to find a particular team member (e.g., determine a current location of the particular team member) in an office building so the team member can resolve a project issue a team has encountered. In this example, the event is the project issue and the mission 110 is finding the particular team member in the office building, which represents the geographical environment 112. In another example discussed herein, a collaboration session 102 may be created for human participants 104(1-N) to coordinate with robotic device participants 106(1-N) and/or artificial intelligence agent participants 108(1-N) to execute tasks at a construction site.

Consequently, the coordination enabled via a collaboration session 102 described herein may be scaled to apply in any context in which work (e.g., a mission 110) needs to be done by a human, a robotic device, and an AI agent. Various contexts include disaster response, safety and security, healthcare and medical instrumentation, manufacturing and industrial lines/warehouses, office and/or personal management, agriculture, construction, and so forth. Accordingly, a geographical environment 112, as described herein, can include an identifiable "real-world" setting and/or area. The identifiable real-world setting and/or area can be indoor, such as an office building, a retail building, a personal residence, a warehouse, a hospital, a medical office, a factory floor, a manufacturing line, or other types of settings and/or areas within physical structures that can be blueprint- or human-defined. Alternatively, the identifiable real-world setting and/or area can be outdoor, such as a forest, a mountain, a construction site, a neighborhood, a town, a city, a county, a state, a country, a field, a pasture, or other type of outdoor settings and/or areas that can be map- or human-defined.

Robotic device participants 106(1-N) can operate on land, on water, in the air, in space, or a combination thereof, and can be programmed to perform different tasks. For example, an unmanned aerial vehicle (UAV) may be tasked with capturing video and/or dropping items from the sky. A sea drone may be tasked with capturing video and/or providing supplies to an area that cannot be reached by land. A bomb disposal robotic device may be tasked with capturing video and/or safely disabling an explosive device. A backhoe robotic device may be tasked with capturing video and/or moving dirt, rocks, and/or rubble. A dump truck robotic device may be tasked with capturing video and hauling away dirt, rocks, and/or rubble. An office or retail robotic device may be tasked with stocking retail and/or supply shelves. A warehouse robotic device may be tasked with sorting items in bins. A manufacturing robotic device may be tasked with connecting two parts of an apparatus. A search and rescue robotic device may be tasked with finding and moving a person or an object away from a dangerous situation. These example robotic devices are just a few of the numerous different types of robotic devices that have been manufactured and configured to perform various tasks in varying contexts.

A participant (e.g., a human participant 104, a robotic device participant 106, an AI agent participant 108) starts the collaboration session 102 by creating the collaboration session 102 and joining the collaboration session 102. In one example, the collaboration session 102 reflects a virtual meeting (e.g., videoconference) setting. The participant that starts the collaboration session 102 can then add other participants to the collaboration session 102 via an invitation to join. After the collaboration session 102 is started, the integrated system 100 generates an interaction environment 114 for the collaboration session 102. As shown in the examples described below, the interaction environment 114 includes a graphical representation 116 for each of the participants 104(1-N), 106(1-N), 108(1-N) that have joined the collaboration session 102. In this way, the human participants 104(1-N) can view and/or interact with various resources (e.g., robotic device participants 106(1-N), AI agent participants 108(1-N)) that are available and/or deployed to assist in completion of the mission 110.

As described in further detail below, the system 100 generates graphical representations 116 for the AI agent participants 108(1-N). Moreover, the system 100 identifies a task 117, related to the mission 110, to be executed by a robotic device participant 106 that is currently located in the geographical environment 112, or a particular part of the geographical environment 112. The system 100 then generates a simulation environment 118 that corresponds to the geographical environment 112 or the particular part of the geographical environment 112. Before transmitting instructions for the robotic device participant 106 to actually execute the task 117 in the geographical environment 112 or the particular part of the geographical environment 112, the system 100 causes the simulation environment 118 to be displayed in the interaction environment 114 of the collaboration session 102. Moreover, the system 100 causes a simulated version of the robotic device participant 120 to execute the task 117 in the simulation environment 118.

The system 100 then provides the interaction environment 114 to a computing device 122A-B associated with a human participant 104. In one example, the interaction environment 114 is displayed on a computing screen in two-dimensions, and thus, the computing device 122A can be a desktop computer, a gaming device, a tablet computer, a personal data assistant (PDA), a laptop computer, a telecommunication device (e.g., a smartphone), a wearable device (e.g., a smartwatch), an automotive computer, a network-enabled television, or any other sort of computing device capable of displaying the interaction environment in two dimensions. In another example, the interaction environment 114 is displayed in an immersive environment that includes more than two dimensions (e.g., a 3D environment), and thus, the computing device 122B can be a virtual reality (VR) computing device, an augmented reality (AR) computing device, or a mixed reality (MR) computing device.

FIG. 1 further illustrates that the system 100 enables communications 123 between the collaboration session 102 and each of the participants 104(1-N), 106(1-N), 108(1-N) that have joined the collaboration session 102. In one example, the communications 123 allow for the robotic device participants 106(1-N) to transmit sensor data 124 and/or location data 126 to the collaboration session. The sensor data 124 can include one or more of image data (e.g., still images) captured by an image capture device embedded in or attached to the robotic device participant, video data (e.g., a sequence of video frames) captured by a video capture device embedded in or attached to the robotic device participant, audio data captured by a microphone embedded in or attached to the robotic device participant, temperature data captured by a thermometer embedded in or attached to the robotic device participant, air quality data captured by an air quality sensor embedded in or attached to the robotic device participant, pressure data captured by a pressure sensor embedded in or attached to the robotic device participant, velocity data captured by a velocity sensor embedded in or attached to the robotic device participant, smoke data captured by a smoke detecting sensor embedded in or attached to the robotic device participant, gas data captured by a gas detecting sensor embedded in or attached to the robotic device participant, thermal data captured by a thermal sensor embedded in or attached to the robotic device participant, depth data captured by a depth sensor embedded in or attached to the robotic device participant, odor (smell) data captured by an odor sensor embedded in or attached to the robotic device participant, lidar data captured by a laser component embedded in or attached to the robotic device participant, radar data captured by a radar component embedded in or attached to the robotic device participant, or infrared (IR) data captured by an IR sensor embedded in or attached to the robotic device participant. While a list of example types of data and/or sensors is provided above, it is understood in the context of this disclosure, that a robotic device participant 106 can be configured with hardware, firmware, and/or software to detect and/or sense any type of environmental data. The location data 126 can reflect a location, or position, of a robotic device participant 106 in the geographical environment 112 (e.g., a Global Positioning System (GPS) location).

In another example, the communications 123 allow for the human participants 104(1-N) to transmit and/or receive individual streams of data corresponding to the participants 104(1-N), 106(1-N), 108(1-N), such as audio and/or visual data that capture the appearance and speech of a participant in the collaboration session, a video stream, or video feed, from a camera embedded on a robotic device, and so forth.

In yet another example, the communications 123 allow for the AI agent participants 108(1-N) to receive a context of the interaction environment 114 in a consumable format (e.g., code-based format), as stored in a data structure 128 for the collaboration session 102. Access to the context of the whole interaction environment 114, or a particular aspect of the interaction environment 114 (e.g., a video stream from a robotic device participant 106) enables an AI agent participant 108 to understand and/or analyze particular characteristics of the collaboration session 102.

Consequently, regardless of the size and/or scope of the mission 110 and/or a scale of an event to which the mission 110 responds, the collaboration session 102 described herein enables the different types of participants 104(1-N), 106(1-N), 108(1-N) to work together to complete the mission 110, in which certain tasks 117 may be executed in the simulation environment 118 before actually executed in the geographical environment 112. The collaboration session 102 presents a low barrier of entry for humans and/or robotic devices to be part of a coordinated mission 110. Moreover, the collaboration session 102 enables the integration of heterogenous robotic devices (e.g., different fleets of robotic devices) that are not designed and/or configured to communicate with one another. Moreover, through the use of the accessible AI agents, the collaboration session 102 enables effective participation for humans without detailed working knowledge of the robotic devices deployed to the geographical environment 112 in which the mission 110 is being implemented, thereby reducing the cognitive load required for successful missions and increasing the overall efficiency for mission completion.

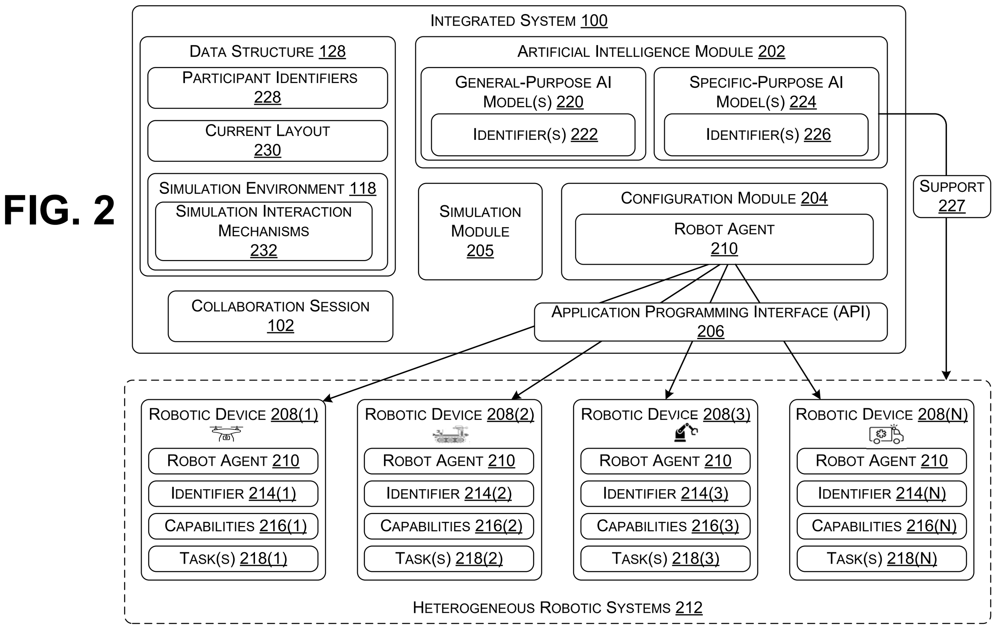

FIG. 2 illustrates further aspects of the integrated system 100 executing the collaboration session 102 that generates the simulation environment 118 for simulated execution of a robotic device participant in the context of the collaboration session 102. The integrated system 100 includes an artificial intelligence (AI) module 202, a configuration module 204, and a simulation module 205. The functionality described herein in association with the illustrated modules can be performed by a fewer number of modules or a larger number of modules on one device (e.g., server) in the integrated system 100 or spread across multiple devices in the integrated system 100.

The configuration module 204 is configured to expose an application programming interface (API) 206 that allows different types of robotic devices 208(1-N) to access and download a robot agent 210 that enables robot device participation in the collaboration session 102. The robot agent 210 includes centralized code (e.g., a software development kit, application programming interface(s)) that configures the different types of robotic devices 208(1-N) with communication software that is compatible with the collaboration session 102. That is, after downloading and installing the robot agent 210, a robotic device 208 can join and participate in the collaboration session 102 via the communication (e.g., transmission) of robot data (e.g., sensor data 124 and/or location data 126).

Thus, the robot agent 210 made available by the configuration module 204 via the API 206 configures a bi-directional communication bridge between a robotic device 208 and the collaboration session 102. More specifically, this bi-directional communication bridge connects the robotic device 208 to cloud infrastructure that hosts the collaboration session 102 via different types of networks including private and/or public local area networks (LANs), private and/or public metropolitan area networks (MANs), private and/or public wide area networks (WANs), Wi-Fi networks, public and/or private mobile networks (e.g., 5G networks, LTE networks), satellite networks, radio networks, and so forth.

As illustrated in FIG. 2, the robotic devices 208(1-N) are heterogeneous 212 robotic devices. More specifically, the robotic devices 208(1-N) respectively include identifiers 214(1-N) that can either define, or be mapped to, different hardware, firmware, and/or software components. As shown, robotic device 208(1) has an identifier 214(1) associated with a first set of capabilities 216(1) with respect to hardware, firmware, and/or software components of an unmanned aerial vehicle (UAV) configured to perform particular task(s) 218(1). Robotic device 208(2) has an identifier 214(2) associated with a second set of capabilities 216(2) with respect to hardware, firmware, and/or software components of a track crawler robotic device configured to perform particular task(s) 218(2). Robotic device 208(3) has an identifier 214(3) associated with a third set of capabilities 216(3) with respect to hardware, firmware, and/or software components of an arm-based robotic device configured to perform particular task(s) 218(3) (e.g., pick up and move an object). Robotic device 208(N) has an identifier 214(N) associated with a Nth set of capabilities 216(N) with respect to hardware, firmware, and/or software components of a search and rescue robotic device configured to perform particular task(s) 218(N). A version of the robot agent 210 downloaded and installed on the robotic devices 208(1-N) can be a common version. Alternatively, a version of the robot agent 210 downloaded and installed on the robotic devices 208(1-N) can be a customized version (e.g., the centralized code has been tailored based on an identifier 214).

In various examples, the invitation to join the collaboration session 102 is a notification that wakes a robotic device 208 from a sleep state and/or activates the robot agent 210 to enable the bi-directional communication bridge to/from the collaboration session 102. As described above, after a robotic device 208 has joined the collaboration session, the robotic device can start participating by communicating (e.g., reporting) sensor data 124 and/or location data 126 to the collaboration session 102.

The AI module 202 provides the collaboration session 102 access to an intelligence backbone in the form of AI models (e.g., multi-modal generative-AI models, large language models (LLMs), small language models (SLMs)). In various examples, the AI module 202 includes general-purpose AI models 220 and associated identifiers 222. A general-purpose AI model 220 can perform general intelligence support for the interaction environment 114, considering the mission 110. Furthermore, the general-purpose AI model 220 can serve as a conduit between humans and specific-purpose AI model(s) 224 with associated identifier(s) 226.

Each type of robotic device 208(1-N) may have a dedicated specific-purpose AI model 224 to assist with, or support 227, task(s) 218(1-N). Thus, after the robotic devices 208(1-N) join the communication session 102, the corresponding specific-purpose AI models 224 dedicated to the robotic devices 208(1-N) can be added or invited to the collaboration session 102. In various examples, AI processing can occur anywhere within a distributed, cloud environment. That is, the AI process can occur at a robotic device 208 (e.g., via a small language model implemented in the robot agent 210), at an edge location, or in the cloud.

In some instances, the general-purpose AI model(s) 220 and/or the specific-purpose AI model(s) 224 comprise large action models (LAMs) and/or small action models (SAMs) that work in combination with other pre-trained or customized models, such as LLMs, SLMs, large multimodal models, and/or small multimodal models. While language models have the main function of generating text, action models can generate and/or perform concrete actions with a given set of instructions or commands from a human participant. Consequently, the AI agent participants 108(1-N) can use action models to act like humans in terms of analyzing data and then acting based on the analysis. For example, while a language model (e.g., LLM, SLM) might be used to understand and respond to a chat message, an action model (e.g., a LAM, a SAM) could autonomously generate and perform tasks described by the chat message. Consequently, action models are sophisticated components that help an AI agent participant 108 understand and execute complex tasks.

In various examples, components of an action model include a foundational language model, as well as a reinforcement learning from human feedback (RLHF) component or a direct preference optimization (DPO) component to fine tune the foundational language model (e.g., make the foundational language model more accurately understand different areas or topics). The language model is then connected to an external tool (e.g., a robotic device participant) that perform actions on its own, which essentially turns the language model into an action model. Consequently, action models are configured to interact with various systems and/or interfaces to perform tasks that involve actual actions, such as controlling robotic device participants.

Further shown in FIG. 2 is the data structure 128 for the collaboration session 102 and/or interaction environment 114. Again, the data structure 128 includes code reflecting the context of the collaboration session 102 and/or interaction environment 114. To this end, the data structure 128 includes participant identifiers 228, a current layout 230 of the interaction environment 114, and the simulation environment 118, each of which is further discussed herein. The simulation module 205 generates the simulation environment 118 such that it includes the simulated version of the robotic device participant 120, as well as simulation interaction mechanisms 232 that are useable to execute the task 117 in the simulated environment 118. In various examples, the simulation module 205 uses an identifier 214 associated with a robotic device participant 208 to access, find, and/or retrieve the simulated version of the robotic device participant 120 (e.g., a digital twin, or digital model, that is based on a type of the robotic device participant).

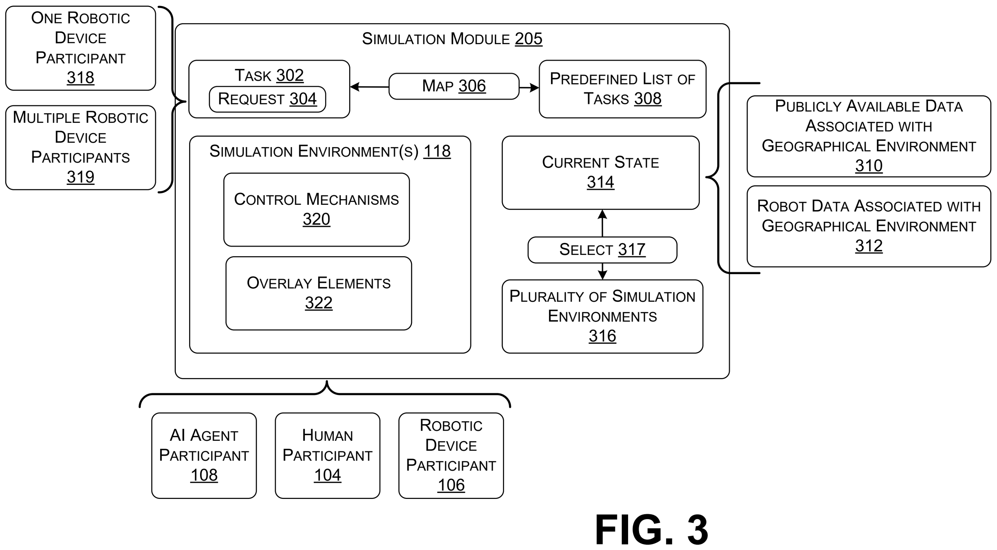

FIG. 3 illustrates example aspects the system uses to generate the simulation environment 118 for simulated execution of the robotic device participant in the context of the collaboration session 102. The simulation module 205 generates the simulation environment 118 via the identification of a task 302 (e.g., task 117) to be executed. In one example, the task 302 is identified via a voice or chat input in the collaboration session 102. In another example, the task 117 is identified via activity that occurs in the collaboration session 102 (e.g., movement of robotic device participants). The simulation module 205 can qualify a task 302 for simulation based on a specific request 304 (e.g., from a human participant or an AI agent participant) to simulate execution of the task 302. Alternatively, the simulation module 205 can map 306 the task 302 to a predefined list of tasks 308 established based on task types that are known to be dangerous or complex. Accordingly, the types of tasks in the predefined list of tasks 308 are associated with a level of danger or complexity that requires validation for safety, effectiveness, and/or efficiency. The mapping 306 is used to ensure that a simulation of task execution by a simulated version of the robotic device participant is implemented, and validated, before allowing actual task execution by the actual the robotic device participant.

After a simulation is requested or it is determined that a simulation is required, the simulation module 205 can generate the simulation environment 118 by accessing publicly available data 310 associated with the geographical environment 112 and/or robot data 312 associated with the geographical environment 112 (e.g., as received from the robotic device participant executing the task 302 or another robotic device participant physically located in the geographical environment 112). The publicly available data 310 may include static data such as a map of the geographical environment 112, blueprints for physical structures, etc. Alternatively, the publicly available data 310 may include dynamic data from sources external to the collaboration session 102 (e.g., a weather report, a hurricane warning). Thus, in one embodiment, the dynamic data is related to environmental metrics that may change over time. The robot data 312 includes different types of sensor data 124, examples of which are described above, usable to generate the simulation environment 118. The sensor data can be static data (e.g., a video stream can be used to outline a structure of a building) or dynamic data. Additionally, robot data 312 includes location data 126. The location data 126 reveals real-world coordinates, as received from the robotic device participant, that can be mapped to simulation coordinates in order to generate the simulation environment 118.

The simulation module 205 uses the publicly available data 310 and/or the robot data 312 to determine a current state 314 of the geographical environment 112, or at least the particular part of the geographical environment 112 in which the task 302 is to be executed via the simulation environment 118. This essentially creates a digital twin, or digital model, for the geographical environment 112 or the part of the geographical environment 112 that is usable for simulation and validation purposes. In various examples, the simulation module 205 includes a plurality of different simulation environments 316 that correspond to the geographical environment 112 or the part of the geographical environment 112. The simulation module 205 can then select 317 the simulation environment 118 from the plurality of different simulation environments 316 based on a type of the task and/or the current state 314 of the geographical environment 112 or the part of the geographical environment 112.

In one embodiment, the task 302 is to be executed by one robotic device participant 318, and thus, the simulation module 205 selects 317 and/or generates the simulation environment 118 to be displayed for task execution by a simulated version of the one robotic device participant 318. In other embodiments, multiple robotic device participants 319 are in position to assist with execution of the task 302, and thus, the simulation module 205 selects 317 and/or generates multiple simulation environments 118 to be displayed for task execution by simulated versions of the multiple robotic device participants 319. Consequently, the plurality of simulation environments 316 can be associated with one or more robotic device participants. In various examples, different backend simulators (e.g., different sets of resources where each set of resources includes compute, storage, and networking) are used to simultaneously and respectively display multiple simulation environments for multiple simulated versions of the multiple robotic device participants.

The simulation environment(s) 118 can include control elements 320 that enable a participant (e.g., a human participant 104, a robotic device participant 106, an AI agent participant 108) to control the execution of the simulated version of the robotic device participant 120 in the simulation environment 118. Moreover, in various examples, the simulation environment 118 can include overlay elements 322 that represent aspects (e.g., digital models, or digital twins, of real-world objects determined to be in the geographical environment 112) of the simulation environment 118 and that can be provided within (e.g., on tope of) a live video stream that is being captured by the robotic device participant and transmitted from the robotic device participant to the collaboration session 102.

In certain instances, a participant may desire to perform multiple simulations in order to evaluate, and identify, the best way to execute the task 302 in the real world. Alternatively, a participant may iterate through multiple simulations based on a determination that execution of the task by simulated versions of the robotic device participants in previous simulations cannot be validated for safety, effectiveness, or efficiency. Consequently, after selecting 317 and displaying a first simulation environment 118, the simulation module 205 can select 317 a subsequent simulation environment 118 from the plurality of different simulation environments 316. Again, this subsequent selection 317 can be based on the type of the task to be executed by the robotic device participant(s) 318, 319 and the current state 314 of the part of the geographical environment that is reflected in the subsequent simulation environment 118. The simulation module 205 can then cause the subsequent simulation environment 118 to be displayed in the interaction environment so that the simulated version of the robotic device participant(s) can execute the task 302 in the subsequent simulation environment 118.

In a specific example, if the first simulation environment 118 displayed proves that a first navigation route to a location identified for a rescue task is not safe, then the simulation module 205 identifies a second navigation route to the location and displays a second simulation environment for the rescue task based on the second navigation route. This process can be repeated until a safe navigation route is validated.

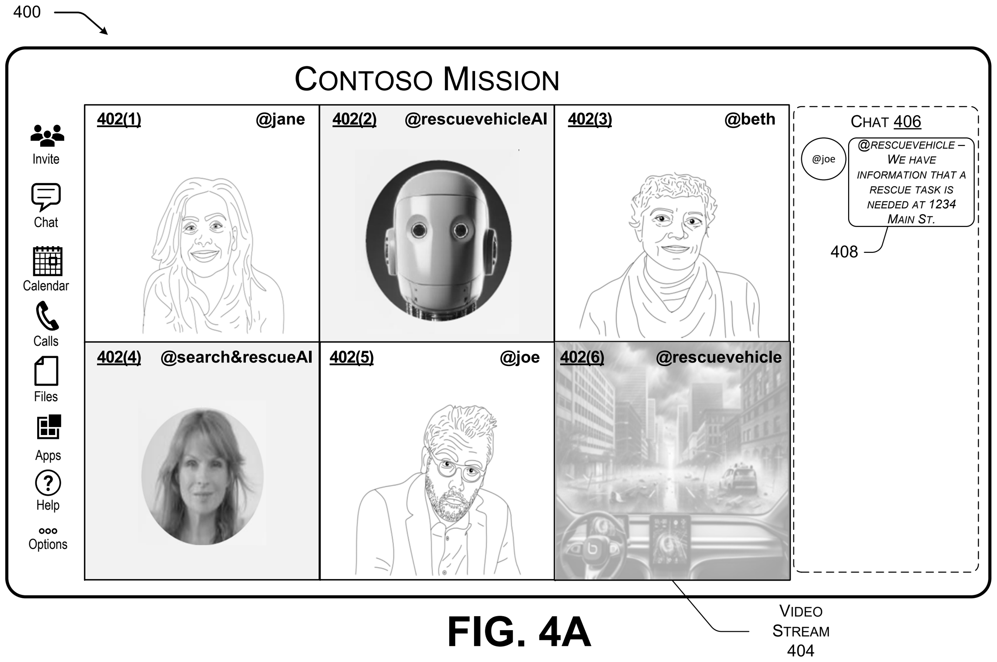

FIG. 4A illustrates an example interaction environment 400 in which a task can be identified via a message in a chat. As shown, the mission 110 is entitled the "Contoso Mission", which is directed to the example context of responding to a weather event (e.g., a hurricane or a strong storm). Accordingly, the interaction environment 400 includes display areas 402(1-6) that display graphical representations 116 for six participants. Additionally, the display areas 402(1-6) display identifiers for the six participants.

For example, display area 402(1) shows that a human participant 104 identified as "@jane" has joined the collaboration session 102 and the display area 402(1) includes a graphical representation 116 of "@jane", e.g., in the form of a video stream being captured by a video camera on Jane's computing device 122A. Display area 402(2) shows that an AI agent participant 108 identified as "@rescuevehicleAI" has joined the collaboration session 102 and the display area 402(2) includes a graphical representation 116 of "@rescuevehicleAI". Display area 402(3) shows that a human participant 104 identified as "@beth" has joined the collaboration session 102 and the display area 402(3) includes a graphical representation 116 of "@beth", e.g., in the form of a video stream being captured by a video camera on Beth's computing device 122A. Display area 402(4) shows that an AI agent participant 108 identified as "@search&rescueAI" has joined the collaboration session 102 and the display area 402(4) includes a graphical representation 116 of "@search&rescueAI". Display area 402(5) shows that a human participant 104 identified as "@joe" has joined the collaboration session 102 and the display area 402(5) includes a graphical representation 116 of "@joe", e.g., in the form of a video stream being captured by a video camera on Joe's computing device 122A. Finally, area 402(6) shows that a robotic device participant 106 identified as "@rescuevehicle" has joined the collaboration session 102 and the display area 402(6) includes a graphical representation 116 of "@rescuevehicle", e.g., in the form of a video stream 404 being captured by a video capture component embedded in or attached to "@rescuevehicle".

The AI agent participant 108 "@search&rescueAI" is a general-purpose AI participant (e.g., corresponding to a general-purpose AI model 220) that provides general intelligence to search and rescue operations. In contrast, the AI agent participant 108 "@rescuevehicleAI" is a specific-purpose AI participant (e.g., corresponding to a specific-purpose AI model 222) that is dedicated to supporting rescue-type robotic devices including the robotic device participant 106 identified as "@rescuevehicle".

FIG. 4A further includes a chat 406 with a message 408 posted by human participant 104 "@joe" *stating - "@rescuevehicle - We have information that a rescue task is needed at 1234 Main St."* The AI agent participant 108 "@search&rescueAI" can identify (e.g., via a mapping 306) the task described in the message 408 as having a type included in the predefined list of tasks 308 that require simulation and validation before actual execution. Consequently, AI agent participant 108 "@search&rescueAI" can cause the simulation module 205 to generate the simulation environment.

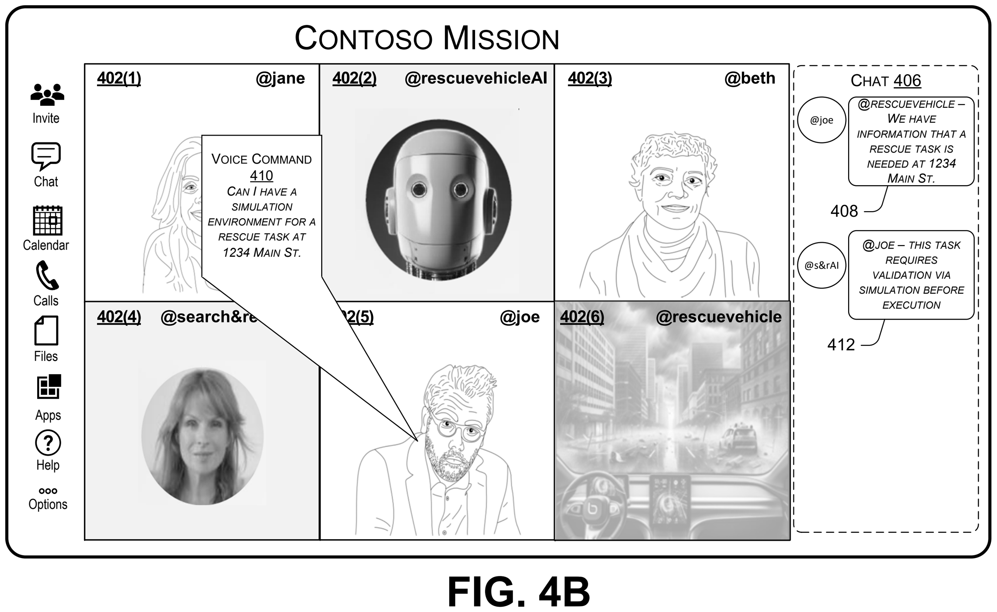

FIG. 4B illustrates the example interaction environment 400 of FIG. 4A, where an alternative way to identify a task for simulation is shown. In the example of FIG. 4B, the human participant 104 "@joe" speaks a voice command 410 that specifically requests a simulation, e.g., *"Can I have a simulation environment for a rescue task at 1234 Main St."* In response to the message 408 or the voice command 410, the AI agent participant 108 "@search&rescueAI" posts a message 412 stating *"@joe - this task requires validation via simulation before execution."* Alternatively, the AI agent participant 108 "@search&rescueAI" can speak a voice command communicating the same information regarding required validation via simulation.

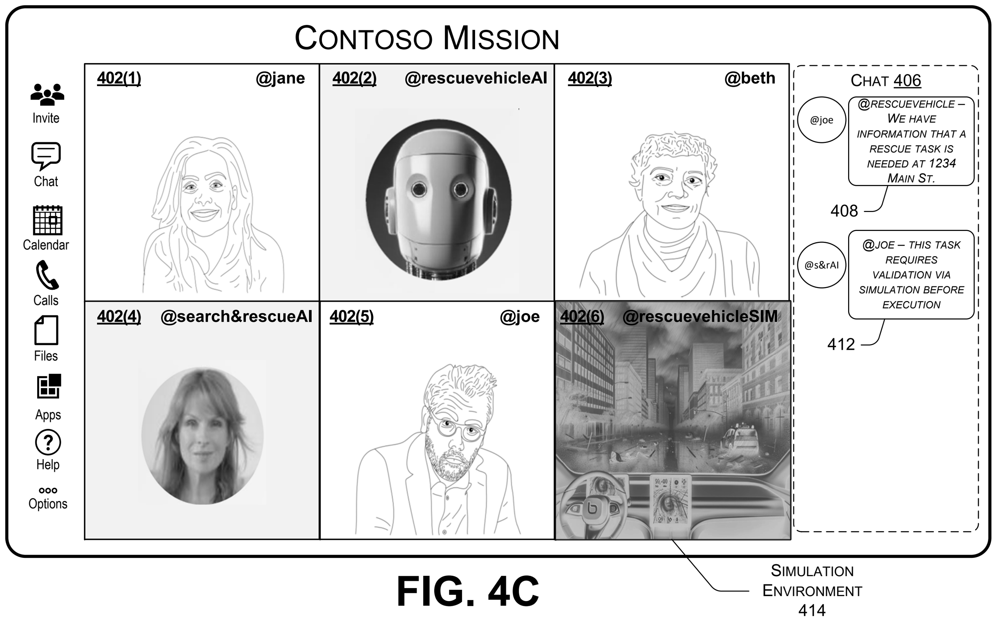

FIG. 4C illustrates the example interaction environment of FIG. 4A, where a simulation environment is displayed in a context of a collaboration session. As shown, after a task has been identified for simulation, or simulation has been requested for a task, the simulation module 205 selects and/or generates the simulation environment 118 (e.g., in accordance with aspects of FIG. 3) and displays the simulation environment 118 in an interaction environment. In the example of FIG. 4C, a simulation environment 414 replaces the video stream 404 that is being received from the robotic device participant 106 "@rescuevehicle". Accordingly, the area 404(6) is now identified as "@rescuevehicleSIM" to inform a participant of the simulation environment 118 being displayed and/or to distinguish between a live video stream and a simulation.

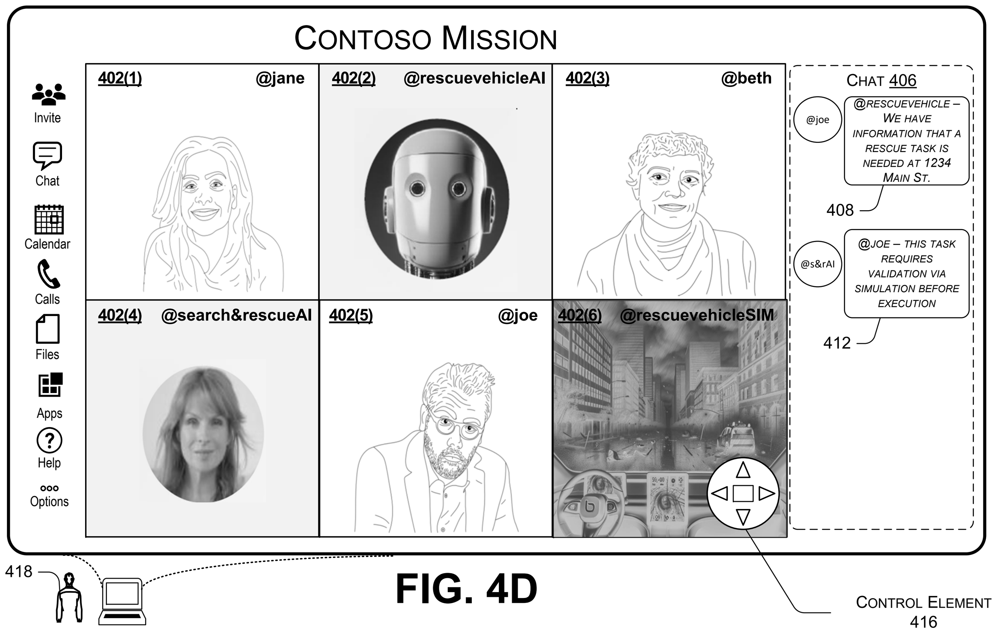

FIG. 4D illustrates the example interaction environment of FIG. 4C, where the simulation environment 414 is displayed with control element(s) 416 for a human participant 418 (e.g., "@joe"). This enables the human participant 418 to execute the simulation, or instruct the simulated version of the robotic device participant to navigate its way through the simulation environment 414 to execute the rescue task. In various examples, the simulation module 205 is configured to execute, in association with the simulation environment 414 and collaboration session, a mechanism for the human participant 418 to provide input that activates the control element 416 for operating the simulated version of the robotic device participant 120. The simulation module 205 receives, via the mechanism, the input from the human participant 418. The input causes the control element 416 for operating the simulated version of the robotic device participant 120 to be activated in association with the simulation environment 414. As shown in the example of FIG. 4D, activating the control element 416 comprises displaying the control element 416 in the context of the interaction environment 400. In an alternative example, activating the control element configures the simulation environment 414 to engage with operation hardware associated with a computing device being used by the human participant 418. The system ultimately receives, via a control element (e.g., control element 416), a control input from the human participant 418 and displays, in the simulation environment 414 and based on the control input received, an action of the simulated version of the robotic device participant 120.

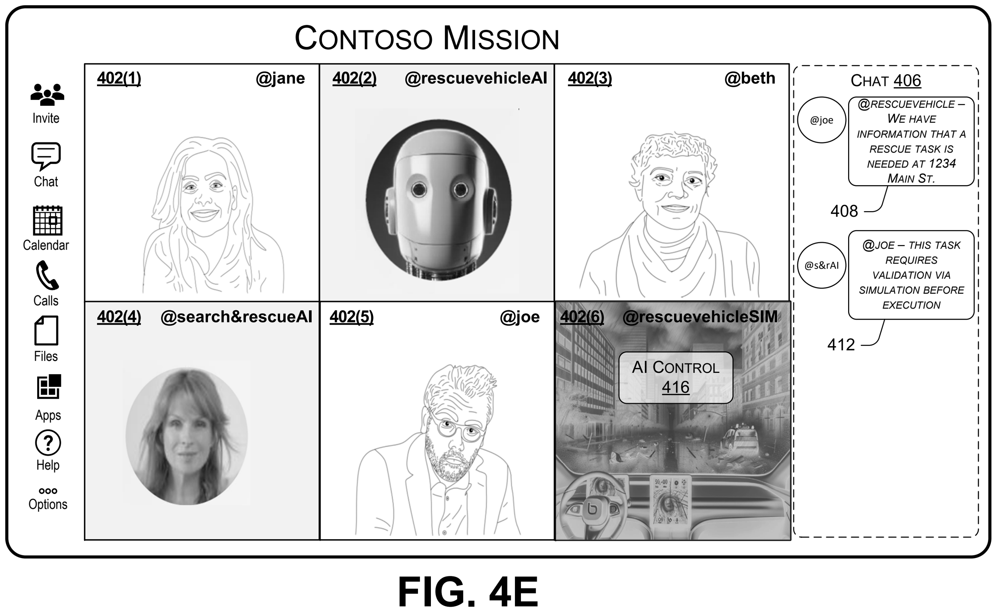

FIG. 4E illustrates the example interaction environment of FIG. 4C, where the simulation environment 414 displays a notification 416 that control of a simulated version of a robotic device participant belongs to an AI agent participant (e.g., the AI agent participant 108 "@rescuevehicleAI"). Accordingly, task execution in the simulation environment 414 can be controlled by an AI agent participant and/or another robotic device participant. For example, the simulation module 205 is configured to execute, within the simulation environment 414, a mechanism for a human participant to provide input that causes the AI agent participant to assist with completion of the task that is part of the mission in a simulated manner. The AI agent participant is configured to assist with completion of the task in the simulation environment 414 by generating an instruction for the simulated version of the robotic device participant. The simulation module 205 then provides, via the collaboration session and based on the input received, the instruction from the AI agent participant to the simulated version of the robotic device participant in the simulation environment 414. The notification 416 informs a participant that control of the simulated version of the robotic device participant in the simulation environment 414 belongs to an AI agent participant (e.g., as opposed to a human participant).

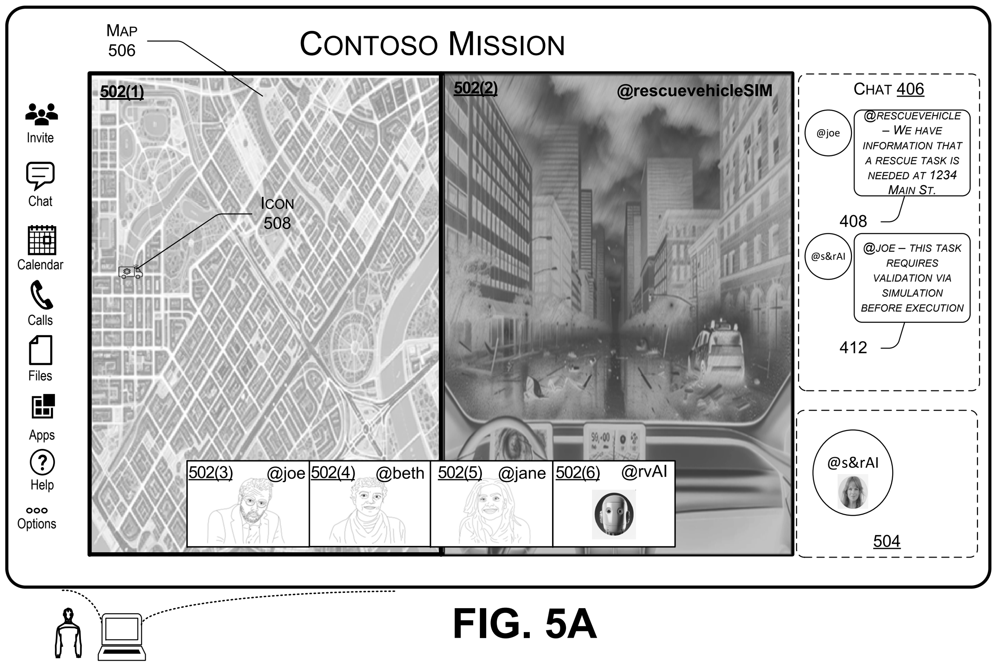

FIG. 5A illustrates an alternative layout of the example interaction environment of FIG. 4C. In this example, the participants are divided into primary display areas 502(1-6) and a secondary display area 504 that displays participants (e.g., the AI agent participant 108 "@search&rescueAI") not displayed in one of the primary display areas 502(1-6). The example interaction environment of FIG. 5A includes a map 506 of the geographical environment (displayed in primary display area 502(1)) and an icon 508 representing a simulated location of the simulated version of the robotic device participant 120. In the example of FIG. 5A, the simulation environment 414 is displayed in display area 502(2).

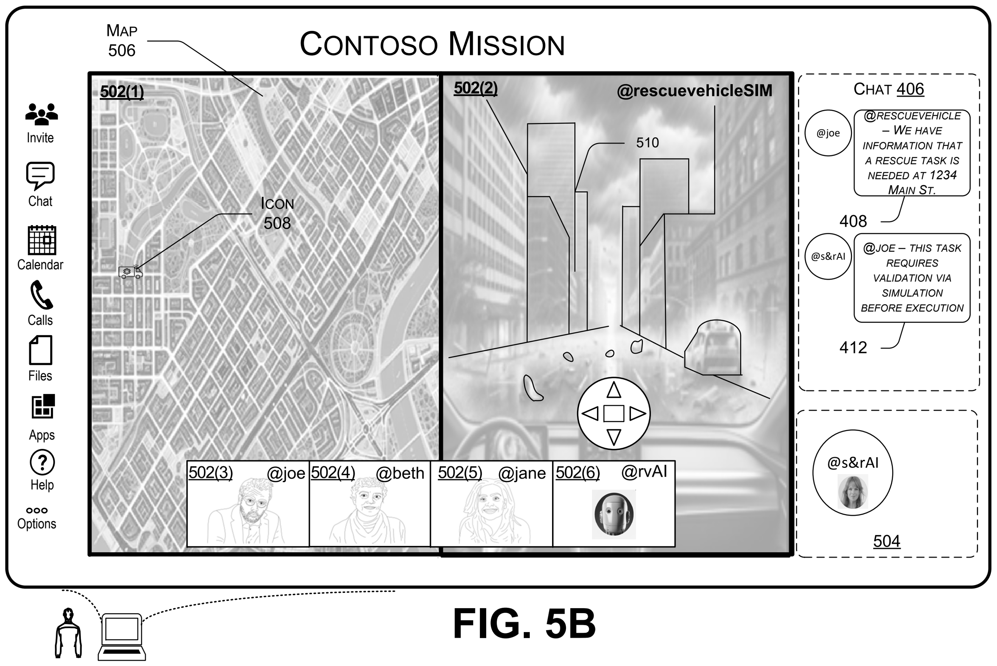

FIG. 5B illustrates the example interaction environment of FIG. 5A, where overlay elements 510 associated with a simulation environment 414 are displayed on top of a live video stream being captured by the robotic device participant "@rescuevehicle" and transmitted from the robotic device participant "@rescuevehicle" to the collaboration session. In this example, the overlay elements are lines that graphically represent aspects of the simulation environment. More specifically, the overlay elements can be digital twins, or digital models, of real-world objects such as recognized buildings and/or detected debris to be in the view of the rescue vehicle driving down a street to perform a rescue task. Displaying the simulation environment as overlay elements 510 in conjunction with the live video stream enables a human and/or AI agent participant to perform and validate different maneuvers, or steps, of the task as they are encountered (e.g., on a maneuver-by-maneuver basis).

After validation of the task, or a maneuver associated with the task, is completed for safety, efficiency, and/or effectiveness purposes is confirmed by a human participant or an AI agent participant, then the collaboration session can terminate or suspend the simulation environment and allow the actual execution of the task or the maneuver associated with the task.

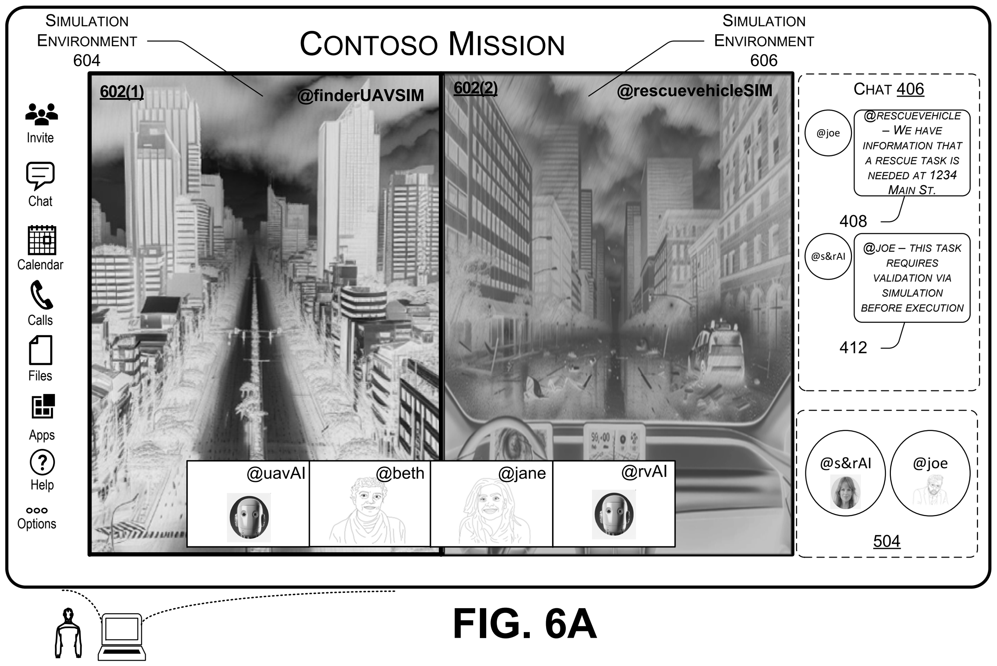

FIG. 6A illustrates an example interaction environment similar to that shown in FIG. 5A, where multiple simulation environments are separately displayed for simulated versions of multiple robotic device participants. As shown, a first display area 602(1) displays a first simulation environment 604 for a simulated version of a first robotic device participant "@finderUAVSIM". The first simulation environment 604 assists with execution of a task that is being performed in a second simulation environment 606 for a simulated version of a second robotic device participant "@rescuevehicleSIM". Specifically, the simulation environment 604 is associated with an unmanned aerial vehicle (UAV) flying through a strong storm to assist with a rescue, while the simulation environment 606 is associated with a rescue vehicle that is to pick up the person to be rescued. Accordingly, the simulation environments 604, 606 can be simultaneously displayed so that different robotic device participants assisting with execution of a task can have their own simulations in the interaction environment. As mentioned above, the simulations can be performed by human participants (e.g., "@beth", "@jane"), by AI agent participants (e.g., "@uavAI", "@rvAI"), or by other robotic device participants.

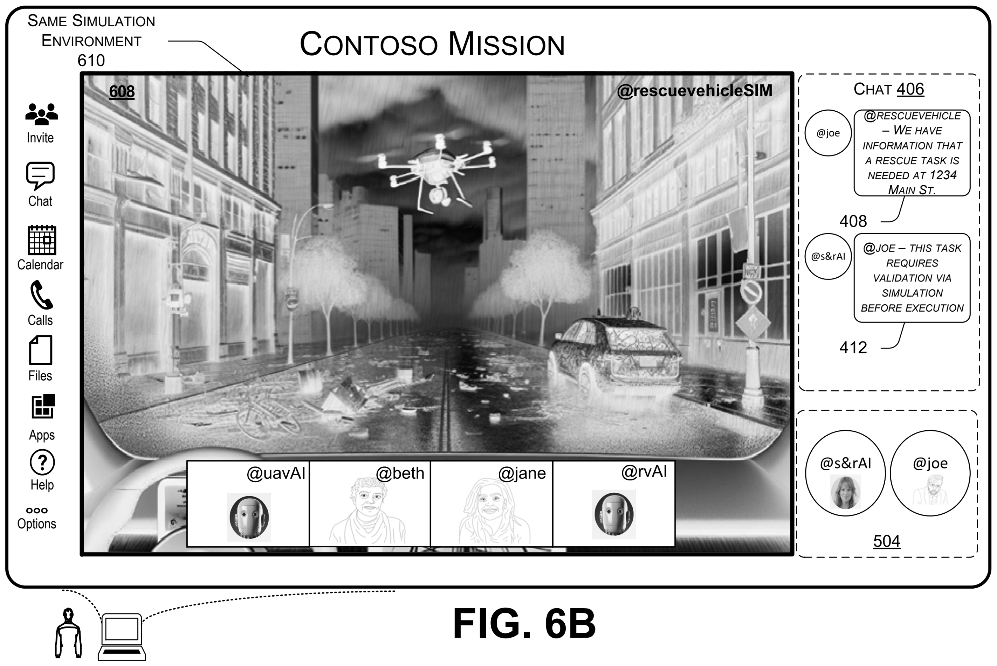

FIG. 6B illustrates an example interaction environment in which a single simulation environment is displayed for simulated versions of multiple robotic device participants. In this example, the simulations for simulated versions of a first robotic device participant "@finderUAVSIM" and a second robotic device participant "@rescuevehicleSIM" are displayed in a same display area 608. Stated alternatively, the same simulation environment 610 includes the simulated versions of a first robotic device participant "@finderUAVSIM" and a second robotic device participant "@rescuevehicleSIM". In this example, the UAV is displayed in the simulated view of the rescue vehicle.

FIGS. 4A-E, 5A-B, and 6A-B include a smaller number of graphical representations for a smaller number of respective participants in a collaboration session 102. However, it is understood in the context of this disclosure that a collaboration session 102 can have a larger number of participants (e.g., twenty participants, thirty participants, fifty participants) depending on the size and/or scope of the mission 110. Consequently, via the interaction environment 114 (e.g., interaction environment 400) provided by a collaboration session 102, human participants 104(1-N) are provided with a centralized space that allows the human participants 104(1-N) to not only view helpful resources (e.g., robotic device participants 106(1-N), AI agent participants 108(1-N), simulation capabilities) that are available and/or deployed to assist in completion of the mission 110, but also interact with the helpful resources in a way that provides effective and efficient coordination.

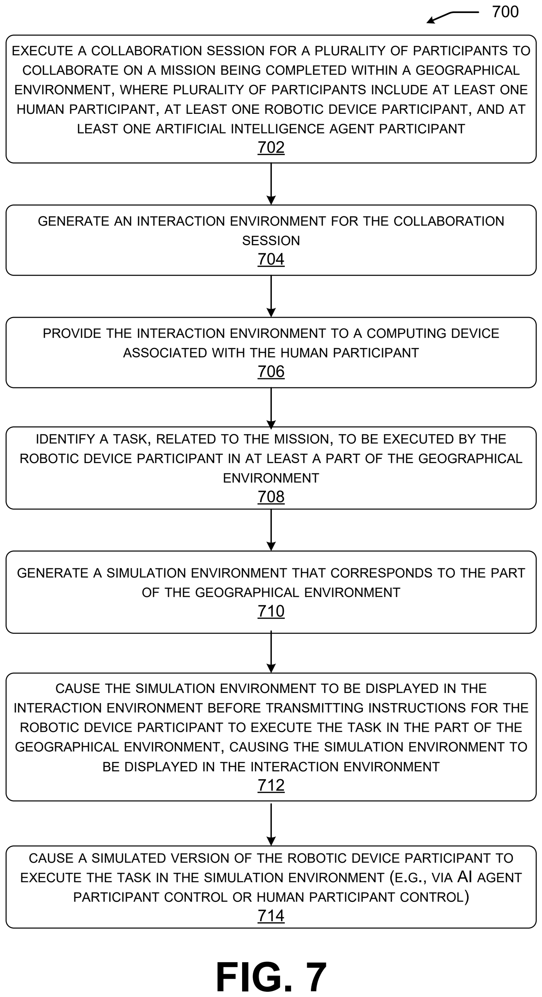

FIG. 7 illustrates a process 700 for executing a collaboration session between at least one human participant, at least one robotic device participant, and at least one artificial intelligence agent participant, where the system generates a simulation environment for simulated execution of the robotic device participant in the context of the collaboration session. The process 700 begins at operation 702 where a system executes a collaboration session for a plurality of participants to collaborate on a mission being completed within a geographical environment. As described above, the plurality of participants includes the artificial intelligence agent participant, a human participant, and a robotic device participant.

At operation 704, the system generates an interaction environment for the collaboration session.

At operation 706, the system provides the interaction environment to a computing device associated with the human participant.

At operation708, the system identifies a task, related to the mission, to be executed by the robotic device participant in at least a part of the geographical environment.

At operation 710, the system generates a simulation environment that corresponds to the part of the geographical environment.

At operation 712, the system causes the simulation environment to be displayed in the interaction environment before transmitting instructions for the robotic device participant to execute the task in the part of the geographical environment, causing the simulation environment to be displayed in the interaction environment.

At operation 714, the system causes a simulated version of the robotic device participant to execute the task in the simulation environment (e.g., via AI agent participant control or human participant control).

For ease of understanding, the processes discussed in this disclosure are delineated as separate operations represented as independent blocks. However, these separately delineated operations should not be construed as necessarily order dependent in their performance. The order in which the processes are described is not intended to be construed as a limitation, and any number of the described process blocks may be combined in any order to implement the processes or an alternate processes. Moreover, it is also possible that one or more of the provided operations is modified or omitted.

The particular implementation of the technologies disclosed herein is a matter of choice dependent on the performance and other requirements of a computing device. Accordingly, the logical operations described herein are referred to variously as states, operations, structural devices, acts, or modules. These states, operations, structural devices, acts, and modules can be implemented in hardware, software, firmware, in special-purpose digital logic, and any combination thereof. It should be appreciated that more or fewer operations can be performed than shown in the figures and described herein. These operations can also be performed in a different order than those described herein.

It also should be understood that the illustrated processes can end at any time and need not be performed in their entirety. Some or all operations of the processes, and/or substantially equivalent operations, can be performed by execution of computer-readable instructions included on a computer-storage media, as defined below. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, handheld computing devices, microprocessor-based, programmable consumer electronics, combinations thereof, and the like.

Thus, it should be appreciated that the logical operations described herein are implemented (1) as a sequence of computer implemented acts or program modules running on a computing system and/or (2) as interconnected machine logic circuits or circuit modules within the computing system. The implementation is a matter of choice dependent on the performance and other requirements of the computing system. Accordingly, the logical operations described herein are referred to variously as states, operations, structural devices, acts, or modules. These operations, structural devices, acts, and modules may be implemented in software, in firmware, in special purpose digital logic, and any combination thereof.

For example, the operations of the processes can be implemented, at least in part, by modules running the features disclosed herein can be a dynamically linked library (DLL), a statically linked library, functionality produced by an application programing interface (API), a compiled program, an interpreted program, a script, or any other executable set of instructions. Data can be stored in a data structure in one or more memory components. Data can be retrieved from the data structure by addressing links or references to the data structure.

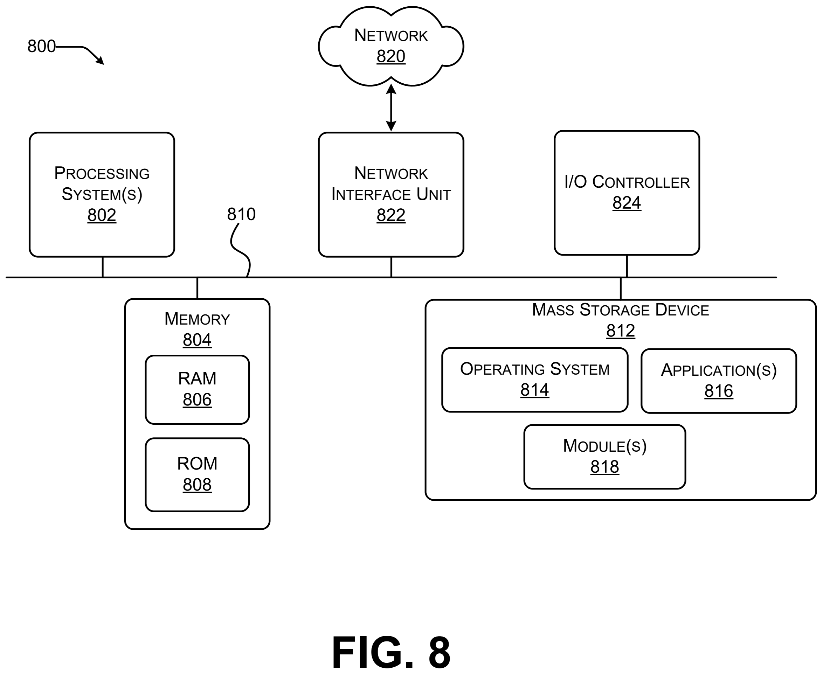

FIG. 8 shows additional details of an example computer architecture 800 for a device, such as a computer (e.g., computing device 122) or a server configured as part of the integrated system 800, capable of executing computer instructions (e.g., a module or a program component described herein). The computer architecture 800 illustrated in FIG. 8 includes processing unit(s) 802, a system memory 804, including a random-access memory 806 ("RAM") and a read-only memory ("ROM") 808, and a system bus 810 that couples the memory 804 to the processing unit(s) 802.

Processing unit(s), such as processing unit(s) 802, can represent, for example, a CPU-type processing unit, a GPU-type processing unit, a field-programmable gate array (FPGA), another class of digital signal processor (DSP), or other hardware logic components that may, in some instances, be driven by a CPU. For example, and without limitation, illustrative types of hardware logic components that can be used include Application-Specific Integrated Circuits (ASICs), Application-Specific Standard Products (ASSPs), System-on-a-Chip Systems (SOCs), Complex Programmable Logic Devices (CPLDs), etc.

A basic input/output system containing the basic routines that help to transfer information between elements within the computer architecture 800, such as during startup, is stored in the ROM 808. The computer architecture 800 further includes a mass storage device 812 for storing an operating system 814, application(s) 816, modules 818, and other data described herein.

The mass storage device 812 is connected to processing unit(s) 802 through a mass storage controller connected to the bus 810. The mass storage device 812 and its associated computer-readable media provide non-volatile storage for the computer architecture 800. Although the description of computer-readable media contained herein refers to a mass storage device, it should be appreciated by those skilled in the art that computer-readable media can be any available computer-readable storage media or communication media that can be accessed by the computer architecture 800.

Computer-readable media can include computer-readable storage media and/or communication media. Computer-readable storage media can include one or more of volatile memory, nonvolatile memory, and/or other persistent and/or auxiliary computer storage media, removable and non-removable computer storage media implemented in any method or technology for storage of information such as computer-readable instructions, data structures, program modules, or other data. Thus, computer storage media includes tangible and/or physical forms of media included in a device and/or hardware component that is part of a device or external to a device, including but not limited to random access memory (RAM), static random-access memory (SRAM), dynamic random-access memory (DRAM), phase change memory (PCM), read-only memory (ROM), erasable programmable read-only memory (EPROM), electrically erasable programmable read-only memory (EEPROM), flash memory, compact disc read-only memory (CD-ROM), digital versatile disks (DVDs), optical cards or other optical storage media, magnetic cassettes, magnetic tape, magnetic disk storage, magnetic cards or other magnetic storage devices or media, solid-state memory devices, storage arrays, network attached storage, storage area networks, hosted computer storage or any other storage memory, storage device, and/or storage medium that can be used to store and maintain information for access by a computing device.

In contrast to computer-readable storage media, communication media can embody computer-readable instructions, data structures, program modules, or other data in a modulated data signal, such as a carrier wave, or other transmission mechanism. As defined herein, computer storage media does not include communication media. That is, computer-readable storage media does not include communications media consisting solely of a modulated data signal, a carrier wave, or a propagated signal, per se.

According to various configurations, the computer architecture 800 may operate in a networked environment using logical connections to remote computers through the network 820. The computer architecture 800 may connect to the network 820 through a network interface unit 822 connected to the bus 810. The computer architecture 800 also may include an input/output controller 824 for receiving and processing input from a number of other devices, including a keyboard, mouse, touch, or electronic stylus or pen. Similarly, the input/output controller 824 may provide output to a display screen, a printer, or other type of output device.

It should be appreciated that the software components described herein may, when loaded into the processing unit(s) 802 and executed, transform the processing unit(s) 802 and the overall computer architecture 800 from a general-purpose computing system into a special-purpose computing system customized to facilitate the functionality presented herein. The processing unit(s) 802 may be constructed from any number of transistors or other discrete circuit elements, which may individually or collectively assume any number of states. More specifically, the processing unit(s) 802 may operate as a finite-state machine, in response to executable instructions contained within the software modules disclosed herein. These computer-executable instructions may transform the processing unit(s) 802 by specifying how the processing unit(s) 802 transition between states, thereby transforming the transistors or other discrete hardware elements constituting the processing unit(s) 802.

The disclosure presented herein also encompasses the subject matter set forth in the following clauses.

Example Clause A, a method that simulates execution of a robotic device in a collaboration session for validation purposes, the method comprising: executing the collaboration session for a plurality of participants to collaborate on a mission to be completed within a geographical environment, wherein the plurality of participants includes an artificial intelligence agent participant, a human participant, and a robotic device participant; generating an interaction environment for the collaboration session; providing the interaction environment to a computing device associated with the human participant; identifying a task, related to the mission, to be executed by the robotic device participant in at least a part of the geographical environment; generating a simulation environment that corresponds to the part of the geographical environment; before transmitting instructions for the robotic device participant to execute the task in the part of the geographical environment, causing the simulation environment to be displayed in the interaction environment; and causing a simulated version of the robotic device participant to execute the task in the simulation environment.

Example Clause B, the method of Example Clause A, wherein the simulation environment is generated by accessing at least one of publicly available data or sensor data from the robotic device participant or another robotic device participant physically located in at least a part of the geographical environment.

Example Clause C, the method of Example Clause B, wherein the at least one of the publicly available data or the sensor data is used to determine a current state of the part of the geographical environment that is reflected in the simulation environment.

Example Clause D, the method of Example Clause C, further comprising selecting the simulation environment from a plurality of different simulation environments based on a type of the task to be executed by the robotic device participant and the current state of the part of the geographical environment that is reflected in the simulation environment.

Example Clause E, the method of Example Clause D, further comprising: selecting a subsequent simulation environment from the plurality of different simulation environments based on the type of the task to be executed by the robotic device participant and the current state of the part of the geographical environment that is reflected in the subsequent simulation environment; causing the subsequent simulation environment to be displayed in the interaction environment; and causing the simulated version of the robotic device participant to execute the task in the subsequent simulation environment.

Example Clause F, the method of Example Clause E, further comprising determining that execution of the task by the simulated version of the robotic device in the simulation environment cannot be validated for safety, effectiveness, or efficiency, wherein selecting the subsequent simulation environment is implemented in response to determining that execution of the task by the simulated version of the robotic device in the simulation environment cannot be validated for safety, effectiveness, or efficiency.

Example Clause G, the method of any one of Example Clauses A through F, further comprising using an identifier associated with the robotic device participant to retrieve the simulated version of the robotic device participant.

Example Clause H, the method of any one of Example Clauses A through G, further comprising mapping the task to a predefined list of tasks associated with a level of danger or complexity that requires validation for safety, effectiveness, or efficiency.

Example Clause I, the method of Example Clause H, further comprising: confirming, in a context of the collaboration session, that the validation for safety, effectiveness, or efficiency is complete; and in response to confirming that the validation for safety or correctness is complete, allowing the robotic device participant to execute the task in the part of the geographical environment.

Example Clause J, the method of any one of Example Clauses A through I, further comprising overlaying the simulation environment on a video stream received from the robotic device participant.

Example Clause K, the method of any one of Example Clauses A through J, wherein: execution of the task is assisted by another robotic device participant; and the method further comprises: before transmitting additional instructions for the other robotic device participant to assist with execution of the task, causing another simulation environment to be displayed in the interaction environment; and causing a simulated version of the other robotic device participant to assist with execution of the task in the other simulation environment.

Example Clause L, the method of any one of Example Clauses A through J, wherein: execution of the task is assisted by another robotic device participant; and the method further comprises causing, before transmitting additional instructions for the other robotic device participant to assist with execution of the task, a simulated version of the other robotic device participant to assist with execution of the task in the simulation environment.

Example Clause M, a system for generating a graphical representation of an artificial intelligence agent participant in a context of a collaboration session comprising: a processing system; and a computer readable storage medium storing instructions that, when executed by the processing system, cause the system to perform operations comprising: executing a collaboration session for a plurality of participants to collaborate on a mission to be completed within a geographical environment, wherein the plurality of participants includes an artificial intelligence agent participant, a human participant, and a robotic device participant; generating an interaction environment for the collaboration session; providing the interaction environment to a computing device associated with the human participant; identifying a task, related to the mission, to be executed by the robotic device participant in at least a part of the geographical environment; generating a simulation environment that corresponds to the part of the geographical environment; before transmitting instructions for the robotic device participant to execute the task in the part of the geographical environment, causing the simulation environment to be displayed in the interaction environment; and causing a simulated version of the robotic device participant to execute the task in the simulation environment.

Example Clause N, the system of Example Clause M, wherein the simulation environment is generated by accessing at least one of publicly available data or sensor data from the robotic device participant or another robotic device participant physically located in at least a part of the geographical environment.

Example Clause O, the system of Example Clause N, wherein the at least one of the publicly available data or the sensor data is used to determine a current state of the part of the geographical environment that is reflected in the simulation environment.

Example Clause P, the system of Example Clause O, wherein the operations further comprise selecting the simulation environment from a plurality of different simulation environments based on a type of the task to be executed by the robotic device participant and the current state of the part of the geographical environment that is reflected in the simulation environment.

Example Clause Q, the system of Example Clause P, wherein the operations further comprise: selecting a subsequent simulation environment from the plurality of different simulation environments based on the type of the task to be executed by the robotic device participant and the current state of the part of the geographical environment that is reflected in the subsequent simulation environment; causing the subsequent simulation environment to be displayed in the interaction environment; and causing the simulated version of the robotic device participant to execute the task in the subsequent simulation environment.

Example Clause R, the system of any one of Example Clauses M through Q, wherein the operations further comprise mapping the task to a predefined list of tasks associated with a level of danger or complexity that requires validation for safety, effectiveness, or efficiency.

Example Clause S, the system of any one of Example Clauses M through R, wherein the operations further comprise overlaying the simulation environment on a video stream received from the robotic device participant.

Example Clause T, a computer readable storage medium storing instructions that, when executed by a processing system, cause a system to perform operations comprising: executing a collaboration session for a plurality of participants to collaborate on a mission to be completed within a geographical environment, wherein the plurality of participants includes an artificial intelligence agent participant, a human participant, and a robotic device participant; generating an interaction environment for the collaboration session; providing the interaction environment to a computing device associated with the human participant; identifying a task, related to the mission, to be executed by the robotic device participant in at least a part of the geographical environment; generating a simulation environment that corresponds to the part of the geographical environment; before transmitting instructions for the robotic device participant to execute the task in the part of the geographical environment, causing the simulation environment to be displayed in the interaction environment; and causing a simulated version of the robotic device participant to execute the task in the simulation environment.

Example Clause U, a system implements techniques for executing a collaboration session between at least one human participant, at least one robotic device participant, and at least one artificial intelligence agent participant. The collaboration session can be executed in relation to a mission to be completed within a geographical environment. The system described herein generates a simulation environment in the context of the collaboration session. The simulation environment enables the simulated execution of a simulated version of an actual robotic device for validation purposes. For instance, a dangerous task to be executed by the actual robotic device may be simulated before actual execution to ensure the safety of the task is validated. Or, a complex task to be executed by the actual robotic device may be simulated before actual execution to ensure the effectiveness and/or efficiency of the task is validated.

Although the various configurations have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

Conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without author input or prompting, whether these features, elements, and/or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

While certain example embodiments have been described, these embodiments have been presented by way of example only, and are not intended to limit the scope of the inventions disclosed herein. Thus, nothing in the foregoing description is intended to imply that any particular feature, characteristic, step, module, or block is necessary or indispensable. Indeed, the novel methods and systems described herein may be embodied in a variety of other forms; furthermore, various omissions, substitutions and changes in the form of the methods and systems described herein may be made without departing from the scope of the inventions disclosed herein. The accompanying claims and their equivalents are intended to cover such forms or modifications as would fall within the scope of certain of the inventions disclosed herein.

It should be appreciated any reference to "first," "second," etc. items and/or abstract concepts within the description is not intended to and should not be construed to necessarily correspond to any reference of "first," "second," etc. elements of the claims. In particular, within this Summary and/or the following Detailed Description, items and/or abstract concepts such as, for example, individual computing devices and/or operational states of the computing cluster may be distinguished by numerical designations without such designations corresponding to the claims or even other paragraphs of the Summary and/or Detailed Description.

In closing, although the various techniques have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

## Claims

1. A method that simulates execution of a robotic device in a collaboration session for validation purposes, the method comprising:
executing (702) the collaboration session for a plurality of participants to collaborate on a mission to be completed within a geographical environment, wherein the plurality of participants includes an artificial intelligence agent participant, a human participant, and a robotic device participant;
generating (704) an interaction environment for the collaboration session;
providing (706) the interaction environment to a computing device associated with the human participant;
identifying (708) a task, related to the mission, to be executed by the robotic device participant in at least a part of the geographical environment;
generating (710) a simulation environment that corresponds to the part of the geographical environment;
before transmitting instructions for the robotic device participant to execute the task in the part of the geographical environment, causing (712) the simulation environment to be displayed in the interaction environment; and
causing (714) a simulated version of the robotic device participant to execute the task in the simulation environment.

2. The method of claim 1, wherein the simulation environment is generated by accessing at least one of publicly available data or sensor data from the robotic device participant or another robotic device participant physically located in at least a part of the geographical environment.

3. The method of claim 2, wherein the at least one of the publicly available data or the sensor data is used to determine a current state of the part of the geographical environment that is reflected in the simulation environment.

4. The method of claim 3, further comprising selecting the simulation environment from a plurality of different simulation environments based on a type of the task to be executed by the robotic device participant and the current state of the part of the geographical environment that is reflected in the simulation environment.

5. The method of claim 4, further comprising:
selecting a subsequent simulation environment from the plurality of different simulation environments based on the type of the task to be executed by the robotic device participant and the current state of the part of the geographical environment that is reflected in the subsequent simulation environment;
causing the subsequent simulation environment to be displayed in the interaction environment; and
causing the simulated version of the robotic device participant to execute the task in the subsequent simulation environment.

6. The method of claim 5, further comprising determining that execution of the task by the simulated version of the robotic device in the simulation environment cannot be validated for safety, effectiveness, or efficiency, wherein selecting the subsequent simulation environment is implemented in response to determining that execution of the task by the simulated version of the robotic device in the simulation environment cannot be validated for safety, effectiveness, or efficiency.

7. The method of any one of claims 1 through 6, further comprising using an identifier associated with the robotic device participant to retrieve the simulated version of the robotic device participant.

8. The method of any one of claims 1 through 7, further comprising mapping the task to a predefined list of tasks associated with a level of danger or complexity that requires validation for safety, effectiveness, or efficiency.

9. The method of claim 8, further comprising:
confirming, in a context of the collaboration session, that the validation for safety, effectiveness, or efficiency is complete; and
in response to confirming that the validation for safety or correctness is complete, allowing the robotic device participant to execute the task in the part of the geographical environment.

10. The method of any one of claims 1 through 9, further comprising overlaying the simulation environment on a video stream received from the robotic device participant.

11. The method of any one of claims 1 through 10, wherein:
execution of the task is assisted by another robotic device participant; and
the method further comprises:
before transmitting additional instructions for the other robotic device participant to assist with execution of the task, causing another simulation environment to be displayed in the interaction environment; and
causing a simulated version of the other robotic device participant to assist with execution of the task in the other simulation environment.

12. The method of any one of claims 1 through 10, wherein:
execution of the task is assisted by another robotic device participant; and
the method further comprises causing, before transmitting additional instructions for the other robotic device participant to assist with execution of the task, a simulated version of the other robotic device participant to assist with execution of the task in the simulation environment.

13. A system for simulating execution of a robotic device in a collaboration session (102) for validation purposes, comprising:
a processing system (802); and
a computer-readable storage medium storing instructions that, when executed by the processing system, cause the system to perform operations comprising:
executing the collaboration session for a plurality of participants to collaborate on a mission (110) to be completed within a geographical environment (112), wherein the plurality of participants includes an artificial intelligence agent participant (108), a human participant (104), and a robotic device participant (106);
generating an interaction environment (114) for the collaboration session;
providing the interaction environment to a computing device (122) associated with the human participant;
identifying a task (117), related to the mission, to be executed by the robotic device participant in at least a part of the geographical environment;
generating a simulation environment (118) that corresponds to the part of the geographical environment;
before transmitting instructions for the robotic device participant to execute the task in the part of the geographical environment, causing the simulation environment to be displayed in the interaction environment; and
causing a simulated version (120) of the robotic device participant to execute the task in the simulation environment.

14. The system of claim 13, wherein the simulation environment is generated by accessing at least one of publicly available data or sensor data from the robotic device participant or another robotic device participant physically located in at least a part of the geographical environment.

15. A computer-readable storage medium comprising instructions that, when executed by a processing system, cause a system to perform operations of any one of preceding method claims.
